(19) Europäisches Patentamt
European Patent Office
Office européen des brevets

(11) EP 4 038 138 B1

(12) EUROPEAN PATENT SPECIFICATION

(45) Date of publication and mention of the grant of the patent:
**17.09.2025 Bulletin 2025/38**

(21) Application number: **20780204.2**

(22) Date of filing: **30.09.2020**

(51) International Patent Classification (IPC):
***C08L 23/14*** $^{(2006.01)}$ ***C08L 23/12*** $^{(2006.01)}$

(52) Cooperative Patent Classification (CPC):
(C-Sets available)
**C08L 23/14; C08F 210/16; C08J 5/18; C08L 23/12;**
C08J 2323/08; C08J 2423/16; C08L 2203/16;
C08L 2203/162; C08L 2205/035; C08L 2207/066;
C08L 2314/06 (Cont.)

(86) International application number:
**PCT/EP2020/077285**

(87) International publication number:
**WO 2021/063975 (08.04.2021 Gazette 2021/14)**

(54) **POLYMER COMPOSITION SUITABLE FOR MAKING BLOWN FILMS**
POLYMERZUSAMMENSETZUNG ZUR HERSTELLUNG VON BLASFOLIEN
COMPOSITION POLYMÈRE ADAPTÉE À LA FABRICATION DE FILMS SOUFFLÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2019 EP 19201067**

(43) Date of publication of application:
**10.08.2022 Bulletin 2022/32**

(73) Proprietor: **Borealis GmbH**
**1020 Vienna (AT)**

(72) Inventors:
- **WANG, Jingbo**
**4021 Linz (AT)**
- **GAHLEITNER, Markus**
**4021 Linz (AT)**
- **BERGER, Friedrich**
**4021 Linz (AT)**
- **BERNREITNER, Klaus**
**4021 Linz (AT)**

(74) Representative: **Maiwald GmbH**
**Elisenhof**
**Elisenstraße 3**
**80335 München (DE)**

(56) References cited:
**EP-A1- 0 557 953** **EP-A1- 2 682 425**
**EP-A1- 2 965 908** **EP-A1- 3 075 779**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/65927;**
**C08L 23/12, C08L 23/12, C08L 23/0815;**
**C08L 23/12, C08L 23/14, C08L 23/0815;**
**C08L 23/14, C08L 23/0807;**
C08F 210/16, C08F 210/14, C08F 2500/05, C08F 2500/12, C08F 2500/26

## Description

The present invention relates to a polymer composition comprising as component A) a specific $C_2C_3$ random copolymer and as component B) a specific mLLDPE. In addition, the present invention relates to an article comprising said polymer composition and preferably said article is a blown film.

Due to their cost performance, polyethylene and polypropylene are two of the most used materials in different fields, for example fibres, films and thin wall packaging applications. mLLDPE is a preferred material due to its excellent properties, like sealing properties, mechanical properties and optical properties. Blending is one of the common ways to improve these properties. Many prior art documents describe the modification of polypropylene by blending with preferably minor amounts of polyethylene.

EP 0 557 953 A1 refers to polyolefin compositions comprising (by weight): A) from 25 to 95 parts of a crystalline random copolymer of propylene with ethylene and/or another alpha - olefin, containing more than 85% by weight of propylene, and having Haze values lower than 25%; and B) from 5 to 75 parts of a component comprising (a) an elastomeric copolymer of ethylene with propylene and/or another alpha -olefin, and optionally with minor proportions of a diene, containing 20 to 80 parts of ethylene, and (b) one or more of the polymers selected from LLDPE, LDPE, HDPE, having a Melt Index higher than 0.5 g/10 min, said (a) and (b) being present in such proportions that the ratio between the density of (A) and calculated average density of (B) is from 0.980 to 1.015. No sealing or hot-tack performance is disclosed for the respective compositions, but the necessarily high density of the PE component implies high melting points.

WO 02/44272 A1 relates to polyolefin compositions comprising a) 85 to 98 wt.-% based on the total weight of the composition of a heterophasic propylene/ $\alpha$-olefin copolymer comprising a polymer or copolymer of propylene and an $\alpha$-olefin with 0 to 15 mol-% of the $\alpha$-olefin as matrix polymer and a propylene/ $\alpha$ -olefin rubber copolymer comprising 20 to 80 mol-% of the $\alpha$-olefin and b) 15 to 2 wt.-% based on the total weight of the composition of an ethylene homopolymer or an ethylene/$\alpha$-olefin copolymer, the $\alpha$-olefin in the ethylene copolymer having 4 to 10 carbon atoms, the ethylene homo- or compolymer having a density lower than 0,925 $g/m^3$, processes for producing these compositions and their use. The compositions are particularly useful for food packaging, especially for deep freezing applications. The haze of said compositions is, however, mostly high, and neither sealing nor hot-tack performance is disclosed.

US 4,113,806 A1 refers to a polypropylene blend which includes about 70 to about 90 % by weight of a polypropylene, about 1 to about 18 % by weight of a low density polyethylene and about 2 to about 24 % by weight of an amorphous ethylene-propylene copolymer elastomer, with or without a non-conjugated diene, having a high combined ethylene content. The polypropylene impact blends are useful for making molded or extruded shaped articles and the like which are essentially clear. Despite the fact that transparency is claimed in general, no haze values are given for the respective compositions. In addition, neither sealing nor hot-tack performance is disclosed. EP 2 965 908 A1 refers to a polymer which is suitable for flexible and transparent films, and especially for the formation of sealing layers of flexible multi-layer film constructions.

In contrary, the present invention refers to the modification of polyethylene by blending with preferably minor amounts of polypropylene. So far, no attempts have been made to modify polyethylene with polypropylene, because of the technical prejudice that it is not possible to obtain films having a good balance of properties with these blends. In general, blending polypropylene into polyethylene increases the stiffness, whereas the toughness is going down or stays at the same level and at the same time the optical and sealing properties worsen.

The polymer compositions known from the prior art in which polypropylene is blended into polyethylene do not allow to obtain blown films having very good mechanical and good sealing properties. It was therefore an object of the present invention to provide polymer composition that are suited for producing blown films with very good mechanical properties and good sealing properties.

These objects have been solved by the polymer composition according to claim 1 comprising at least the following components:

A) 10.0 to 45.0 wt.-% based on the overall weight of the polymer composition of a $C_2C_3$ random copolymer; whereby said $C_2C_3$ random copolymer has

- a melting point in the range of 110 to 135°C determined by differential scanning calorimetry according to ISO 11357-3;
- a $MFR_2$ (230°C, 2.16 kg) determined according to ISO 1133 in the range of 0.5 to 4.0 g/10 min; and
- a C3-content being higher than the C2-content;

and whereby component A) is consisting of

a1) 50.0 to 85.0 wt.-% of a polymer fraction having

i) a C2-content in the range of 2.0 to less than 5.5 wt.-%, preferably in the range of 2.0 to 5.49 wt.-%; and

ii) a melt flow rate $MFR_2$ (230°C, 2.16kg) determined according to ISO 1133 in the range of 0.5 to 5.0 g/10min; and

a2) 15.0 to 50.0 wt.-% of a polymer fraction having

i) a C2-content in the range of 5.5 to 10.0 wt.-%; and
ii) a melt flow rate $MFR_2$ (230 °C/2.16kg) measured according to ISO 1133 in the range of from 0.1 to 3.0 g/10min;

the melt flow rate $MFR_2$ (230°C/2.16kg) of polymer fraction a2) being lower than the $MFR_2$ (230°C/2.16kg) of polymer fraction a1);

B) 55.0 to 90.0 wt.-% based on the overall weight of the polymer composition of a metallocene-based linear low density polyethylene (mLLDPE); whereby said mLLDPE has

- a density determined according to ISO 1183 in the range of 900 to 940 kg/$m^3$; and
- a $MFR_2$ (190°C, 2.16 kg) determined according to ISO 1133 in the range of 0.5 to 4.0 g/10 min;

C) optionally at least one additive;
with the proviso that the weight proportions of components A) and B) and, if present, component C), add up to 100 wt.-%.

Advantageous embodiments of the polymer composition in accordance with the present invention are specified in the dependent claims 2 to 9.

Claim 10 of the present invention relates to an article comprising the polymer composition according to the present invention and claim 11 specifies said article as a blown film. Claims 12 to 14 refer to advantageous embodiments of the blown film, and claim 15 refers to flexible packaging systems comprising the blown film according to the present invention.

## Definitions

Indications of Quantity

The polymer compositions in accordance with the present invention comprise the components A) and B) and optionally additives. The requirement applies here that the components A) and B) and if present the additives add up to 100 wt.-% in sum. The fixed ranges of the indications of quantity for the individual components A) and B) and optionally the additives are to be understood such that an arbitrary quantity for each of the individual components can be selected within the specified ranges provided that the strict provision is satisfied that the sum of all the components A), B) and optionally the additives add up to 100 wt.-%.

For the purposes of the present description and of the subsequent claims, "mLLDPE" stands for metallocene-based linear low density polyethylene. This means a linear low density polyethylene manufactured by using a metallocene catalyst.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

$C_2C_3$ random copolymer (component A))

The polymer composition in accordance with the present invention comprises as component A) 10.0 to 45.0 wt.-% based on the overall weight of the polymer composition of a $C_2C_3$ random copolymer; whereby said $C_2C_3$ random copolymer has a melting point in the range of 110 to 135°C determined by differential scanning calorimetry according to ISO 11357-3; a $MFR_2$ (230°C, 2.16 kg) determined according to ISO 1133 in the range of 0.5 to 4.0 g/10 min.

According to the present invention component A) is consisting of a1) 50.0 to 85.0 wt.-% of a polymer fraction having i) a C2-content in the range of 2.0 to less than 5.5 wt.-%, preferably in the range of 2.0 to 5.49 wt.-%; and ii) a melt flow rate $MFR_2$ (230°C, 2.16kg) determined according to ISO 1133 in the range of 0.5 to 5.0 g/10min and a2) 15.0 to 50.0 wt.-% of a polymer fraction having i) a C2-content in the range of 5.5 to 10.0 wt.-%; and ii) a melt flow rate $MFR_2$ (230 °C/2.16kg) measured according to ISO 1133 in the range of 0.1 to 3.0 g/10min; whereby the melt flow rate $MFR_2$ (230°C/2.16kg) of polymer fraction a2) is lower than the $MFR_2$ (230°C/2.16kg) of polymer fraction a1).

Preferred embodiments of component A) will be discussed in the following.

In a preferred embodiment component A) has a melting point in the range of 115 to 135°C, preferably in the range of 120 to 135°C and more preferably in the range of 128 to 135°C determined by differential scanning calorimetry according to ISO 11357-3.

Another preferred embodiment of the present application stipulates that component A) has a total C2-content in the range of 2.5 to 7.5 wt.-% and preferably in the range of 3.0 to 7.5 wt.-% based on the overall weight of component A).

According to still another preferred embodiment component A) has a melt flow rate $MFR_2$ (230°C/2.16kg) measured according to ISO 1133 in the range of 0.5 to 3.0 g/10 min.

Still another preferred embodiment of the present invention stipulates that component A) has a xylene soluble content (XCS) determined according to ISO 16152, 1ed, 25°C, based on the overall weight of component A) in the range of 0.5 to 15.0 wt.-%, preferably in the range of 1.0 to 10.0 wt.-% and more preferably in the range of 2.5 to 4.5 wt.-%.

According to another preferred embodiment of the present invention component A) has a glass transition temperature in the range of -20 to 0°C and preferably in the range of -10 to -1°C determined by differential scanning calorimetry according to ISO 11357-2.

Still another preferred embodiment of the present invention stipulates that component A) has a content of hexane solubles determined on a 100 μm thick cast film according to FDA 177.1520 in the range of 0.1 to 2.0 wt.-%, preferably in the range of 0.1 to 1.8 wt.-%, more preferably in the range of 0.1 to 1.6 wt.-% and even more preferably in the range of 0.5 to 1.4 wt.-%.

In another preferred embodiment of the present invention the content of component A) in the polymer composition is in the range of 15 to 43 wt.-%, preferably in the range of 17 to 42 wt.-% and more preferably in the range of 19 to 41 wt.-% based on the overall weight of the polymer composition.

Still another preferred embodiment of the present invention stipulates that component A) is obtainable, preferably obtained, in the presence of a metallocene catalyst.

A preferred metallocene catatalyst comprises

i) a complex of formula (I):

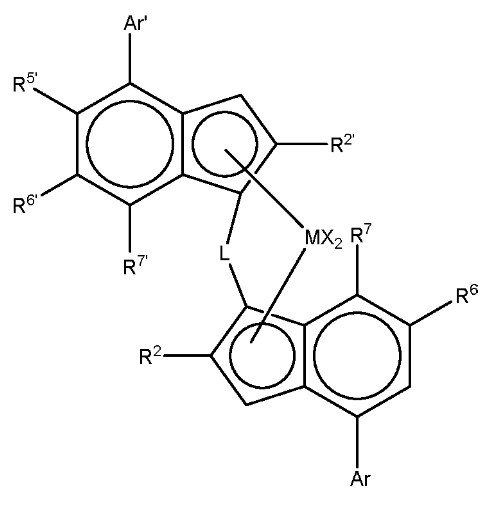

wherein M is zirconium or hafnium;

each X is a sigma ligand;

L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, $C_1$-$C_{20}$-hydrocarbyl, tri($C_1$-$C_{20}$-alkyl)silyl, $C_6$-$C_{20}$-aryl, $C_7$-$C_{20}$-arylalkyl or $C_7$-$C_{20}$-alkylaryl;

$R^2$ and $R^{21}$ are each independently a $C_1$-$C_{20}$-hydrocarbyl radical optionally containing one or more heteroatoms from groups 14 to 16;

$R^{5'}$ is a $C_{1-20}$-hydrocarbyl group containing one or more heteroatoms from groups 14 to 16 optionally substituted by one or more halo atoms;

$R^6$ and $R^{6'}$ are each independently hydrogen or a $C_{1-20}$-hydrocarbyl group optionally containing one or more heteroatoms from groups 14 to 16; wherein $R^{6'}$ is preferably a tertiary alkyl group;

$R^7$ is hydrogen or $C_{1-20}$-hydrocarbyl group optionally containing one or more heteroatoms from groups 14 to 16 and $R^{7'}$ is hydrogen;

Ar and Ar' each are independently an aryl or heteroaryl group having up to 20 carbon atoms optionally substituted by one or more groups $R^1$;

each $R^1$ is a $C_{1-20}$-hydrocarbyl group or two $R^1$ groups on adjacent carbon atoms taken together can form a fused 5 or 6 membered non aromatic ring with the Ar or Ar' group, said ring being itself optionally substituted with one or more groups $R^4$; each $R^4$ is a $C_{1-20}$-hydrocarbyl group; and

(ii) a cocatalyst comprising at least one or two compounds of a group 13 metal, preferably a Al and/or boron compound.

Conditions for manufacturing component A) are described in an at the time of filing the present application unpublished European patent application (application number: 19177302.7, filed on May 29, 2019) of the same applicant as the present application.
Component A) is preferably prepared by polymerizing propylene and ethylene by a sequential polymerization process comprising at least two reactors connected in series in the presence of a metallocene catalyst.
Preferably component A) is prepared in a sequential polymerization process comprising at least two polymerization reactors (R1) and (R2), whereby in the first polymerization reactor (R1) a first polymer fraction a1) is produced, which is subsequently transferred into the second polymerization reactor (R2). In the second polymerization reactor (R2), a second polymer fraction a2) is then produced in the presence of the first polymer fraction a1).
Polymerization processes which are suitable for producing component A) generally comprise at least two polymerization stages and each stage can be carried out in solution, slurry, fluidized bed, bulk or gas phase.
A preferred multistage process for manufacturing component B) is a "loop-gas phase"-process, such as developed by Borealis (known as BORSTAR® technology) which is described e.g. in patent literature, such as in EP 0 887 379 A1, WO 92/12182 A1, WO 2004/000899 A1, WO 2004/111095 A1, WO 99/24478 A1, WO 99/24479 A1 or in WO 00/68315 A1. A further suitable slurry-gas phase process is the Spheripole process of Basell.
A preferred cocatalyst system for manufacturing component A) comprises a boron containing cocatalyst, like borate cocatalyst and an aluminoxane cocatalyst. Even more preferably, the catalyst is supported on a silica support.
Generally, the catalyst system used in the present invention may be prepared as described in WO 2018/122134 A1. The catalyst can be used in supported or unsupported form, preferably in supported form.

<u>mLLDPE (component B))</u>

The polymer composition according to the present invention comprises as component B) 55.0 to 90.0 wt.-% based on the overall weight of the polymer composition of a mLLDPE; whereby said mLLDPE has a density determined according to ISO 1183 in the range of 900 to 940 $kg/m^3$ and a $MFR_2$ (190°C, 2.16 kg) determined according to ISO 1133 in the range of 0.5 to 4.0 g/10 min.
Preferred embodiments of component B) will be discussed in the following.
According to a preferred embodiment of the present invention component B) is a multimodal mLLDPE with at least two different comonomers selected from alpha-olefins having from 4 to 10 carbon atoms, which multimodal polymer of ethylene has a density in the range from 910 to 935 $kg/m^3$ and a Mw/Mn of 2 to 8.
By applying a bimodal component B) it is possible to improve the processability of a blown film made of the

material and a bimodal terpolymer as component B) allows to optimised the sealing performance of a blown film made of this material.

Still another preferred embodiment of the present invention stipulates that component B) has a $MFR_2$ (190°C, 2.16 kg) determined according to ISO 1133 in the range of 0.5 to 3.0 g/10 min and preferably in the range of 1.0 to 2.0 g/10 min.

According to a further preferred embodiment of the present invention component B) has a $MFR_{21}$/ $MFR_2$ of 13.0 to 35.0 ($MFR_{21}$ at 190°C under 21.6 kg load and $MFR_2$ at 190°C under 2.16 kg load).

In still another preferred embodiment of the present invention component B) has a Mw/Mn in the range of 2 to 7, preferably in the range of 2 to 5.

Still another preferred embodiment of the present invention stipulates that component B) comprises 1-butene and 1-hexene, preferably is a terpolymer comprising i) an ethylene butene copolymer and ii) an ethylene hexene copolymer, more preferably comprises i) an ethylene butene copolymer and ii) an ethylene hexene copolymer, whereby ethylene, butene and hexene are the only comonomers present in the respective component.

One preferred component B) is commercially available from Borouge under the trade name Anteo™ FK1820.

In another preferred embodiment component B) is a multimodal polymer of ethylene and comprises at least components b1) and b2). These have been produced under different polymerization conditions resulting in different properties like melt flow rates or a different ratio of Mw/Mn.

A preferred multimodal component B) comprises at least two different comonomers selected from alpha-olefins having from 4 to 10 carbon atoms, and having a density in the range of 910 to 935 kg/$m^3$, and a Mw/Mn in the range of 2 to 8.

It is preferred that the metallocene catalyst used for manufacturing component B) is a single site catalyst, preferably a substituted and/or bridged bis-cyclopentadienyl zirconium or hafnium catalyst. The use of a single site catalyst allows to obtain a product having a Mw/Mn of between 2.0 and 5.0, preferably between 2.5 and 4.5, more preferably between 2.5 and 4.0. This may further contribute to improve and/or optimize material properties, especially optical properties such as transparency, and/or mechanical properties. In addition, this may also contribute to improve the homogeneity of the composition and/or the optical appearance. A film made of a component B) manufactured with a single site catalyst shows increased gloss and transparency. In addition, the content of extractables/oligomers is lower and the homogeneity is improved.

In a preferred embodiment component B) is a multimodal terpolymer manufactured by using a single site catalyst. This specific combination of technical features allows obtaining films having improved sealing properties.

## Additives

The polymer composition according to the present invention may also comprise additives.

According to a preferred embodiment of the present invention the polymer composition comprises at least one additive preferably selected from the group consisting of slip agents, acid scavengers, UV-stabilisers, pigments, antioxidants, additive carriers, nucleating agents and mixtures thereof, whereby these additives preferably are present in 0.1 to 5.0 wt.-% and more preferably in 0.1 to 4.0 wt.-% based on the overall weight of the polymer composition.

Examples of antioxidants which may be used, are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693-36-7, sold as Irganox PS-802 FL™ by BASF), nitrogen-based antioxidants (such as 4,4'- bis(1,1-dimethylbenzyl) diphenylamine) or antioxidant blends.

UV-stabilisers which might be used in the polymer compositions according to the present invention are, for example, Bis-(2,2,6,6-tetramethyl-4-piperidyl)-sebacate (CAS -No. 52829-07-9, Tinuvin 770); 2-hydroxy-4-n-°Ctoxy-benzophenone (CAS-No. 1843-05-6, Chimassorb 81).

Nucleating agents that can be used in the polymer compositions according to the present invention are for example sodium benzoate (CAS No. 532-32-1) or 1,3:2,4-bis(3,4-dimethylbenzylidene)sorbitol (CAS 135861-56-2, Millad 3988).

## Polymer composition

Below preferred embodiments of the polymer composition according to the present invention will be discussed.

In a preferred embodiment of the present invention the content of component A) in the polymer composition is in the range of 15 to 43 wt.-%, preferably in the of from 17 to 42 wt.-% and more preferably in the range of 19 to 41 wt.-% based on the overall weight of the polymer composition and/or the content of component B) in the polymer composition is in the range from 57 to 85 wt.-%, preferably in the range from 58 to 83 wt.-% and more preferably in the range from 59 to 81 wt.-% based on the overall weight of the polymer composition.

A preferred polymer composition according to the present invention comprises and preferably consists of the

following components:

A) 5.0 to 44.9 wt.-% and preferably 16.75 to 41 wt.-% based on the overall weight of the polymer composition of a $C_2C_3$ random copolymer; whereby said $C_2C_3$ random copolymer has

- a melting point in the range of 110 to 135°C and preferably in the range of 128 to 135°C determined by differential scanning calorimetry according to ISO 11357-3;
- a $MFR_2$ (230°C, 2.16 kg) determined according to ISO 1133 in the range of 0.5 to 4.0 g/10 min and preferably in the range of 0.5 to 3.0 g/10 min; and
- a C3-content being higher than the C2-content, preferably having a C2-content in the range of 3.0 to 7.5 wt.-% based on the overall weight of component A);

B) 55.0 to 90.0 wt.-% and preferably 58 to 83 wt.-% based on the overall weight of the polymer composition of a mLLDPE; whereby said mLLDPE has

- a density determined according to ISO 1183 in the range of 900 to 940 kg/$m^3$; and
- a $MFR_2$ (190°C, 2.16 kg) determined according to ISO 1133 in the range of 0.5 to 4.0 g/10 min and preferably in the range of 0.5 to 3.0 g/10 min; and preferably
- a Mw/Mn of 2 to 8;

C) 0.1 to 5.0 wt.-% and preferably 0.25 to 1.0 wt.-% based on the overall weight of the polymer composition of additives preferably selected from the group consisting of slip agents, acid scavengers, UV-stabilisers, pigments, antioxidants, additive carriers, nucleating agents and mixtures thereof;

with the proviso that the weight proportions of components A), B) and C) add up to 100 wt.-%.

Blown film

The present invention also relates to blown films comprising or consisting of the polymer composition in accordance with the present invention.

Below preferred embodiments of the blown film according to the present invention will be discussed.

One preferred embodiment of the present invention stipulates that the sealing initiation temperature determined on a blown film with a thickness of 50 μm is in the range of 80°C to below 110°C, preferably in the range of 85°C to 100°C and more preferably in the range of 88°C to 96°C.

According to a further preferred embodiment of the present invention the hot-tack force determined on a blown film with a thickness of 50 μm is in the range of 2.5 N to 5.0 N, preferably in the range of 2.8 to 4.8 N and more preferably in the range of 3.0 to 4.5 N.

Still another preferred embodiment of the present invention stipulates that the blown film has a tensile modulus determined according to ISO 527-3 at 23°C on blown films with a thickness of 50 μm in machine direction as well as in transverse direction in the range of 200 to 500 MPa and preferably in the range of 240 to 370 MPa.

In another preferred embodiment of the present invention the blown film has a dart-drop impact strength determined according to ASTM D1709, method A on a 50 μm blown film in the range of 100 g to 1000 g, preferably in the range of 200 to 900 g and more preferably in the range of 300 to 800 g.

According to a further preferred embodiment of the present invention the blown film has an Elmendorf tear strength determined in accordance with ISO 6383/2 measured in machine direction in the range of 50.0 N/mm to 250.0 N/mm, preferably in the range of 70.0 to 180.0 N/mm and more preferably in the range of 85.0 to 150.0 N/mm.

A further preferred embodiment of the present invention stipulates that the blown film has an Elmendorf tear strength determined in accordance with ISO 6383/2 measured in transverse direction (TD) in the range of 50.0 N/mm to 300.0 N/mm, preferably in the range of 100.0 to 250.0 N/mm and more preferably in the range of 150.0 to 200.0 N/mm.

For manufacturing the blown film a melt of the polymer composition according to the present invention is extruded through an annular die and blown into a tubular film by forming a bubble which is collapsed between nip rollers after solidification. The blown extrusion can be preferably effected at a temperature in the range 160 to 240°C, and cooled by water or preferably by blowing gas (generally air) at a temperature of 10 to 50°C to provide a frost line height of 0.5 to 8 times the diameter of the die. The blow up ratio should generally be in the range of from 1.5 to 4, such as in the range of from 2 to 4

and preferably in the range of from 2.5 to 3.5.

Flexible packaging systems

The present invention also relates to flexible packaging systems, selected from bags or pouches for food and pharmaceutical packaging comprising a blown film in accordance with the present invention.

The invention will now be described with reference to the following non-limiting examples.

**Experimental Part**

**A. Measuring methods**

The following definitions of terms and determination methods apply for the above general description of the invention as well as to the below examples unless otherwise defined.

**Melt Flow Rate**

The melt flow rate (MFR) was determined according to ISO 1133 - Determination of the melt mass-flow rate (MFR) and melt volume-flow rate (MVR) of thermoplastics -- Part 1: Standard method and is indicated in g/10 min. The MFR is an indication of the flowability, and hence the processability, of the polymer. The higher the melt flow rate, the lower the viscosity of the polymer. The $MFR_2$ of polyethylene is determined at a temperature of 190°C and a load of 2.16 kg. The $MFR_2$ of polypropylene is determined at a temperature of 230°C and a load of 2.16 kg.

**Determination of the C2- and C3-content in component A) by NMR**

Quantitative nuclear-magnetic resonance (NMR) spectroscopy was further used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of 1,2-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

Determination of the C3- and C6-content of the C3C6 random copolymer by NMR

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the NOE at short recycle delays of 3s (Klimke, K., Parkinson, M., Piel, C., Kaminsky, W., Spiess, H.W., Wilhelm, M., Macromol. Chem. Phys. 2006;207:382., Pollard, M., Klimke, K., Graf, R., Spiess, H.W., Wilhelm, M., Sperber, O., Piel, C., Kaminsky, W., Macromolecules 2004;37:813.). and the RS-HEPT decoupling scheme (Filip, X., Tripon, C., Filip, C., J. Mag. Resn. 2005, 176, 239., Griffin, J.M., Tripon, C., Samoson, A., Filip, C., and Brown, S.P., Mag. Res. in Chem. 2007 45, S1, S198). A total of 16384 (16k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-hexene were observed and the comonomer content quantified in the following way.

The amount of 1-hexene incorporated in PHP isolated sequences was quantified using the integral of the αB4 sites at 44.2 ppm accounting for the number of reporting sites per comonomer:

$$H = I\alpha B4 / 2$$

The amount of 1-hexene incorporated in PHHP double consecutive sequences was quantified using the integral of the ααB4 site at 41.7 ppm accounting for the number of reporting sites per comonomer:

$$HH = 2 * I\alpha\alpha B4$$

When double consecutive incorporation was observed the amount of 1-hexene incorporated in PHP isolated sequences needed to be compensated due to the overlap of the signals αB4 and αB4B4 at 44.4 ppm:

$$H = (I\alpha B4 - 2 * I\alpha\alpha B4) / 2$$

The total 1-hexene content was calculated based on the sum of isolated and consecutively incorporated 1-hexene:

$$Htotal = H + HH$$

When no sites indicative of consecutive incorporation observed the total 1-hexene comonomer content was calculated solely on this quantity:

$$Htotal = H$$

The total comonomer incorporation of 1-hexene in mole percent was calculated from the mole fraction in the usual manner:

$$H\ [mol\%] = 100 * fH$$

The total comonomer incorporation of 1-hexene in weight percent was calculated from the mole fraction in the standard manner:

$$H\ [wt\%] = 100 * (fH * 84.16) / ((fH * 84.16) + ((1 - fH) * 42.08))$$

**Calculation** of 1-hexene content of the propylene 1-hexene copolymer (PHC-2):

$$\frac{C(PHC) - w(P)x\,C(A)}{w(B)} = C(B)$$

wherein

- w(A) is the weight fraction of the propylene 1-hexene copolymer (PHC-1);
- w(B) is the weight fraction of the propylene 1-hexene copolymer (PHC-2);
- C(A) is the 1-hexene content [in wt.-%] measured by $^{13}C$ NMR spectroscopy of the propylene 1-hexene copolymer (PHC-1);
- C(PHC) is the 1-hexene content [in wt.-%] measured by $^{13}C$ NMR spectroscopy of the propylene 1-hexene copolymer (PHC);
- C(B) is the calculated 1-hexene content [in wt.-%] measured by $^{13}C$ NMR spectroscopy of the propylene 1-hexene copolymer (PHC-2);

**Xylene cold solubles (XCS)**

The xylene soluble (XS) fraction as defined and described in the present invention was determined in line with ISO 16152 as follows: 2.0 g of the polymer were dissolved in 250 ml p-xylene at 135°C under agitation. After 30 minutes, the solution was allowed to cool for 15 minutes at ambient temperature and then allowed to settle for 30 minutes at 25 +/- 0.5°C. The solution was filtered with filter paper into two 100 ml flasks. The solution from the first 100 ml vessel was evaporated in nitrogen flow and the residue dried under vacuum at 90°C until constant weight is reached. The xylene soluble fraction (percent) can then be determined as follows:

$$XS\% = (100*m*V_0)/(m_0*v);$$

$m_0$ = initial polymer amount (g); m = weight of residue (g); $V_0$ = initial volume (ml); v = volume of analysed sample (ml).

**Melting temperature $T_m$ and Crystallization temperature $T_c$**

The melting temperature was determined with a TA Instrument Q2000 differential scanning calorimetry (DSC) on 5 to 7 mg samples. DSC is run according to ISO 11357 / part 3 / method C2 in a heat / cool /heat cycle with a scan rate of 10°C/min in the temperature range of -30 to +225°C. Crystallization temperature ($T_c$) is determined from the cooling step, while melting temperature ($T_m$) and melting enthalpy ($H_m$) are determined from the second heating step. For calculating the melting enthalpy 50°C is used as lower integration limit. Melting and crystallization temperatures were taken as the peaks of endotherms and exotherms.

**Glass transition temperature $T_g$**

The glass transition temperature $T_g$ was measured by DSC according to ISO 11357 / part 2.

**Density**

Density of the materials was measured according to ISO 1183-1.

All film properties (except hexane solubles) were determined on monolayer blown films of 50 μm thickness produced on a Collin blown film line. This line has a screw diameter of 30 millimeters (mm), L/D of 30, a die diameter of 60 mm, a die gap of 1.5 mm and a duo-lip cooling ring. The film samples were produced at 210°C with an average thickness of 50 μm, with a 2.5 blow-up ratio and an output rate of about 8 kilograms per hour (kg/h).

**Content of hexane solubles in component A)**

1 g of a polymer cast film of 100 μm thickness (chill roll temperature during film production = 40°C) was added to 400 ml hexane at 50°C for 2 hours while stirring with a reflux cooler. After 2 hours the mixture is immediately filtered on a filter paper N°41.The precipitate is collected in an aluminium recipient and the residual hexane is evaporated on a steam bath under N2 flow. The amount of hexane solubles is determined by the formula

$$((\text{wt. sample} + \text{wt. crucible}) - (\text{wt crucible})) / (\text{wt. sample}) \cdot 100.$$

**Hot Tack Force**

The hot-tack force was determined according to ASTM F1921-12 - Method B on a J&B Hot-Tack Tester on a 50 μm thickness film produced on a monolayer cast film line.

All film test specimens were prepared in standard atmospheres for conditioning and testing at 23°C (± 2°C) and 50 % (± 10 %) relative humidity.

The minimum conditioning time of test specimen in standard atmosphere before start testing is at least 16 h. The minimum storage time between extrusion of film sample and start testing is at least 88 h.

The hot tack measurement determines the strength of heat seals formed in the films, immediately after the seal has been made and before it cools to ambient temperature. The hot-tack measurement was performed under the following conditions:

Film Specimen width: 25.4 mm.
Seal bar length: 50 mm; Seal bar width: 5 mm; Seal bar shape: flat
Seal Pressure: 0.3 $N/mm^2$, Seal Time: 0.5sec; Cool time: 99 sec; Peel Speed: 200 mm/sec. Start temperature: 90°C; End temperature: 140°C; Increments: 10°C.

The hot tack force was measured as a function of temperature within the temperature range and with temperature increments as indicated above. The number of test specimens were at least 3 specimens per temperature. The output of this method is a hot tack curve; a force vs. temperature curve. The hot tack force (HTF) is evaluated from the curve as the highest force (maximum peak value) with failure mode "peel".

**Sealing initiation temperature (SIT); (sealing end temperature (SET), sealing range)**

The sealing temperature range is the temperature range, in which the films can be sealed according to conditions given below. The lower limit (heat sealing initiation temperature (SIT)) is the sealing temperature at which a sealing strength of >5 N is achieved. The upper limit (sealing end temperature (SET)) is reached, when the films stick to the sealing device.

The sealing range was determined on a J&B Universal Sealing Machine Type 3000 with a film of 50 μm thickness with the following further parameters:

Specimen width: 25.4 mm
Seal Pressure: 0.1 $N/mm^2$
Seal Time: 0.1 s
Cool time: 99 s
Peel Speed: 10 mm/s
Start temperature: 80°C
End temperature: 150°C
Increments: 10°C

The specimen is sealed inside to inside at each sealbar temperature and seal strength (force) is determined at each step. The temperature is determined at which the seal strength reaches 5 N.

### Tensile modulus

Tensile Modulus in machine and transverse direction are determined according to ISO 527-3 at 23°C on blown films of 50 μm thickness produced on a monolayer blown film line with a melt temperature of 220°C and a chill roll temperature of 20°C with a thickness of 50 μm produced as indicated below. Testing was performed at a cross head speed of 1 mm/min.

### Dart-drop impact strength (DDI)

DDI was measured using ASTM D1709, method A (Alternative Testing Technique) from the film samples. A dart with a 38 mm diameter hemispherical head was dropped from a height of 0.66 m onto a film clamped over a hole. Successive sets of twenty specimens are tested. One weight was used for each set and the weight is increased (or decreased) from set to set by uniform increments. The weight resulting in failure of 50 % of the specimens is calculated and reported.

### Tear Strength

Tear Strength (determined as Elmendorf tear (N)): Applies both for the measurement in machine direction (MD) and transverse direction (TD). The tear strength was measured using the ISO 6383/2 method. The force required to propagate tearing across a film sample was measured using a pendulum device. The pendulum swings under gravity through an arc, tearing the specimen from pre-cut slit. The film sample was fixed on one side by the pendulum and on the other side by a stationary clamp. The tear resistance is the force required to tear the specimen. The relative tear resistance (N/mm) was then calculated by dividing the tear resistance by the thickness of the film.

## B. Materials used

### $C_2C_3$ random copolymer (component A))

In the Working Examples according to the invention IE1 and IE2 a $C_2C_3$ random copolymer manufactured as follows was used.

The catalyst used in the polymerization processes for the $C_2C_3$ random copolymer A) was prepared as follows: The metallocene (MC1) (rac-anti-dimethylsilandiyl(2-methyl-4-phenyl-5-methoxy-6-tert-butyl-indenyl)(2-methyl-4-(4-tert-butylphenyl)indenyl)zirconium dichloride)

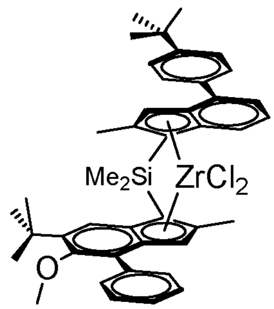

has been synthesized according to the procedure as described in WO 2013/007650 A1, E2.

### Preparation of MAO-silica support

A steel reactor equipped with a mechanical stirrer and a filter net was flushed with nitrogen and the reactor temperature was set to 20°C. Next silica grade DM-L-303 from AGC Si-Tech Co, pre-calcined at 600°C (7.4 kg) was added from a feeding drum followed by careful pressuring and depressurising with nitrogen using manual valves. Then toluene (32 kg) was added. The mixture was stirred for 15 min. Next 30 wt.-% solution of MAO in toluene (17.5 kg) from Lanxess was added via feed line on the top of the reactor within 70 min. The reaction mixture was then heated up to 90°C and stirred at 90°C for additional two hours. The slurry was allowed to settle and the mother liquor was filtered off. The MAO treated

support was washed twice with toluene (32 kg) at 90°C, following by settling and filtration. The reactor was cooled off to 60°C and the solid was washed with heptane (32.2 kg). Finally MAO treated SiO2 was dried at 60° under nitrogen flow for 2 hours and then for 5 hours under vacuum (-0.5 barg) with stirring. MAO treated support was collected as a free-flowing white powder found to contain 12.6 % Al by weight.

**Catalyst system preparation**

30 wt.-% MAO in toluene (2.2 kg) was added into a steel nitrogen blanked reactor via a burette at 20°C. Toluene (7 kg) was then added under stirring. Metallocene MC1 (286 g) was added from a metal cylinder followed by flushing with 1 kg toluene. The mixture was stirred for 60 minutes at 20°C. Trityl tetrakis(pentafluorophenyl) borate (336 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60°C for 2h and additionally for 5 h under vacuum (-0.5 barg) under stirring. Dried catalyst was sampled in the form of pink free flowing powder containing 13.9 wt.-% Al and 0.26 wt.-% Zr.

The polymerization for preparing the $C_2C_3$ random copolymer (A) was performed in a Borstar pilot plant with a 2-reactor set-up (loop - gas phase reactor (GPR 1)). In Table 1 below the polymerization conditions for the $C_2C_3$ random copolymer (A) are given.

**Table 1:** Preparation of the $C_2C_3$ random copolymer (A).

| **Prepoly reactor** | |
|---|---|
| Temperature [°C] | 25 |
| Pressure [kPa] | 5190 |
| Residence time [h] | 0.4 |
| **loop reactor** | |
| Temperature [°C] | 68 |
| Pressure [kPa] | 5387 |
| Feed H2/C3 ratio [mol/kmol] | 0.30 |
| Feed C2/C3 ratio [mol/kmol] | 48.26 |
| Polymer Split [wt.-%] | 67 |
| $MFR_2$ [g/10 min] (MFR of a1)) | 1.7 |
| Total C2 loop [wt.-%] (C2 of a1)) | 4.0 |
| Residence time [h] | 0.43 |
| **GPR1** | |
| Temperature [°C] | 75 |
| Pressure [kPa] | 2500 |
| H2/C3 ratio [mol/kmol] | 3.0 |
| C2/C3 ratio [mol/kmol] | 217 |
| Polymer residence time [h] | 2.1 |
| Polymer Split [wt.-%] | 33 |
| Total $MFR_2$ [g/10 min] | 1.2 |
| $MFR_2$ [g/10 min] in GPR1 (MFR of a2)) | 0.5 |
| Total C2 [wt.-%] (loop + GPR1) | 4.7 |
| C2 in GPR1 [wt.-%] (C2 of a2)) | 6.1 |
| XCS [wt.-%] | 3.4 |
| Total productivity (kg PP/g cat) | 29 |

The polymer powder was compounded in a co-rotating twin-screw extruder Coperion ZSK 57 at 220°C with 0.1 wt.-% antioxidant (Irgafos 168FF, CAS No. 31570-04-4), 0.1 wt.-% of a sterical hindered phenol (Irganox 1010FF, CAS No. 6683-19-8) and 0.05 wt.-% of Ca-stearate (wt.-% refer to the overall weight of the polymer powder).

**Table 2:** Properties of the $C_2C_3$ random copolymer copolymer (A).

| Physical property | unit | $C_2C_3$ random copolymer |
|---|---|---|
| MFR (230°C, 2.16 kg) | [g/10min] | 1.1 |
| XCS total | [wt.-%] | 3.5 |
| C2-content | [wt.-%] | 4.7 |
| C3-content | [wt.-%] | 95.3 |
| Melting point, $T_m$ | [°C] | 119 |
| Crystallization temperature, $T_c$ | [°C] | 80 |

**Component B)**

**FK1820:** Anteo™ FK1820 is a bimodal terpolymer mLLDPE, commercially available by Borouge Pte Ltd (Abu Dhabi, UAE), density 918 kg/m$^3$ (determined according to ASTM D792), Melt Flow Rate (190 °C/2.16 kg, ISO 1133) of 1.50 g/10min and melting temperature (determined by DSC according to ISO 11357/03) of 122°C.

**Further components**

**FT5230:** low density polyethylene, grade FT5230, commercially available by Borealis AG (Austria), density 923 kg/m$^3$ (determined according to ISO1183), Melt Flow Rate (190°C/2.16 kg, ISO 1133) of 0.75 g/10min and melting temperature (determined by DSC according to ISO 11357/03) of 112°C.

**$C_3C_6$ random copolymer**

In Comparative Example CE3 a $C_3C_6$ random copolymer manufactured as follows was used.

The catalyst used form manufacturing the $C_3C_6$ random copolymer is prepared as described in detail in WO 2015/011135 A1 (metallocene complex MC1 with methylaluminoxane (MAO) and borate resulting in Catalyst 3 described in WO 2015/011135 A1) with the proviso that the surfactant is 2,3,3,3-tetrafluoro-2-(1,1,2,2,3,3,3-heptafluoropropoxy)-1-propanol. The metallocene complex (MC1 in WO 2015/011135 A1) is prepared as described in WO 2013/007650 A1 (metallocene E2 in WO 2013/007650 A1).

The $C_3C_6$ random copolymer is produced in a Borstar pilot plant comprising a prepolymerisation reactor, a loop reactor and a gas phase reactor. The polymerisation conditions are indicated in Table 3. The $C_3C_6$ random copolymer is compounded in a co-rotating twin-screw extruder Coperion ZSK 57 at 220 °C with 0.2 wt.-% of Irganox B225 (1:1-blend of Irganox 1010 (Pentaerythrityl-5 tetrakis(3-(3',5'-di-tert.butyl-4-hydroxytoluyl)-propionate and Irgafos 168 (tris (2,4-di-t-butylphenyl) phosphate) phosphite)) of BASF AG, Germany) and 0.1 wt.-% calcium stearate followed by solidification of the resulting melt strands in a water bath and pelletization.

**Table 3**: Preparation of the $C_3C_6$ random copolymer.

| Parameter | unit | $C_3C_6$ random copolymer |
|---|---|---|
| **Prepolymerisation** | | |
| temperature | [°C] | 20 |
| pressure | [kPa] | 5247 |

(continued)

| Parameter | unit | $C_3C_6$ random copolymer |
|---|---|---|
| **Prepolymerisation** | | |
| residence time | [h] | 0.4 |
| **Loop** | | |
| temperature | [°C] | 70 |
| pressure | [kPa] | 5241 |
| residence time | [h] | 0.4 |
| Feed C6/C3 ratio | [mol/kmol] | 7.2 |
| Feed H2/C3 ratio | [mol/kmol] | 0.1 |
| C6 | [wt-%] | 1.3 |
| C3 | [wt.-%] | 98.8 |
| XCS | [wt.-%] | 0.6 |
| MFR | [g/10min] | 1.1 |
| Split | [wt.-%] | 41 |
| **GPR1** | | |
| temperature | [°C] | 80 |
| pressure | [kPa] | 2500 |
| residence time | [h] | 1.8 |
| C6/C3 | [mol/kmol] | 7 |
| H2/C3 ratio | [mol/kmol] | 1.7 |
| C6 total | [wt-%] | 3.2 |
| XCS | [wt.-%] | 0.7 |
| MFR | [g/10min] | 1.5 |
| Split | [wt.-%] | 59 |

**Table 4:** Properties of the $C_3C_6$ random copolymer copolymer.

| Physical property | unit | $C_3C_6$ random copolymer |
|---|---|---|
| MFR (230°C, 2.16 kg) | [g/10min] | 1.5 |
| XCS total | [wt.-%] | 0.7 |
| C3 | [wt.-%] | 96.8 |
| C6 | [wt.-%] | 3.2 |
| Melting point | [°C] | 136 |

**C. Manufacturing of blown films**

Blending of the components was done in a Collin 30 lab scale blown film machine and a 50 μm monolayer blown film is produced with the same line (BUR = 1 : 2.5). Before blending, the components were pre-mixed in an intensive mixer. In Table 5 the composition of the Comparative Examples CE1 to CE3 and the Inventive Examples IE1 and IE2 and film parameters are shown.

**Table 5:** Composition and properties of blown films.

| Component | Unit | CE1 | CE2 | CE3 | IE1 | IE2 |
|---|---|---|---|---|---|---|
| FK1820 (B) | wt.-% | 80 | 60 | 70 | 60 | 80 |
| $C_2C_3$ random copolymer (A) | wt.-% | - | - | - | 40 | 20 |
| FT5230 | wt.-% | 20 | 40 | - | - | - |
| C3C6 random copolymer | wt.-% | - | - | 30 | - | - |
| **Properties of a blown film (50 μm thickness)** | | | | | | |
| Tensile Modulus (MD) | MPa | 232 | 230 | 477 | 347 | 253 |
| Tensile Modulus (TD) | MPa | 255 | 261 | n.m. | 355 | 244 |
| Dart Drop Impact | g | 516 | 272 | 403 | 351 | 780 |
| Tear Strength (MD) | N/mm | 126 | 74 | 126 | 92 | 131 |
| Tear Strength (TD) | N/mm | 194 | 178 | 135 | 185 | 160 |
| Sealing initiation temperature | °C | 90 | 95 | 103 | 94 | 90 |
| Hot Tack Force | N/mm | 3.77 | 3.20 | 2.77 | 3.16 | 4.16 |

**D. Discussion of the results**

The blown film according to Comparative Example CE1 is comparable to the blown film according to Inventive Example IE2 and the blown film according to CE2 can be compared to the blown film according to Inventive Example IE1. These films contain the same amount of component B) (= FK1820) and the films according to the Inventive Examples IE1 and IE2 contain a $C_2C_3$ random copolymer according to the invention, whereas the Comparative Examples contain a LDPE (= FT5230).

As can be gathered from Table 5 the blown films according to the Inventive Examples show not only improved mechanical properties, but also a better sealing behaviour. The $C_3C_6$ random copolymer used in Comparative Example CE3 also shows good mechanical properties, but the sealing properties are not as good as for the blown film according to the present invention.

From the experimental results can be seen that the specific combination of features according to claim 1 allows to obtain blown films having not only excellent mechanical properties, but also very good sealing properties.

**Claims**

**1.** A polymer composition comprising at least the following components:

A) 10.0 to 45.0 wt.-% based on the overall weight of the polymer composition of a $C_2C_3$ random copolymer; whereby said $C_2C_3$ random copolymer has

- a melting point in the range of 110 to 135°C determined by differential scanning calorimetry according to ISO 11357-3;
- a $MFR_2$ (230°C, 2.16 kg) determined according to ISO 1133 in the range of 0.5 to 4.0 g/10 min; and
- a C3-content being higher than the C2-content;

and whereby component A) is consisting of

a1) 50.0 to 85.0 wt.-% of a polymer fraction having

i) a C2-content in the range of 2.0 to less than 5.5 wt.-%, preferably in the range of 2.0 to 5.49 wt.-%; and
ii) a melt flow rate $MFR_2$ (230°C, 2.16kg) determined according to ISO 1133 in the range of 0.5 to 5.0 g/10min; and

a2) 15.0 to 50.0 wt.-% of a polymer fraction having

i) a C2-content in the range of 5.5 to 10.0 wt.-%; and
ii) a melt flow rate $MFR_2$ (230 °C/2.16kg) measured according to ISO 1133 in the range of from 0.1 to 3.0 g/10min;

the melt flow rate $MFR_2$ (230°C/2.16kg) of polymer fraction a2) being lower than the $MFR_2$ (230°C/2.16kg) of polymer fraction a1);
B) 55.0 to 90.0 wt.-% based on the overall weight of the polymer composition of a mLLDPE; whereby said mLLDPE has

- a density determined according to ISO 1183 in the range of 900 to 940 kg/$m^3$; and
- a $MFR_2$ (190°C, 2.16 kg) determined according to ISO 1133 in the range of 0.5 to 4.0 g/10 min;

C) optionally at least one additive;

with the proviso that the weight proportions of components A) and B) and, if present, component C), add up to 100 wt.-%.

**2.** The polymer composition according to claim 1, **characterized in that**, component A) has

- a total C2-content in the range of 2.5 to 7.5 wt.-% and preferably in the range of 3.0 to 7.5 wt.-% based on the overall weight of component A);
- a melt flow rate $MFR_2$ (230 °C/2.16kg) measured according to ISO 1133 in the range of from 0.5 to 3.0 g/10min.

**3.** The polymer composition according to claim 1 or 2, **characterized in that**, component A) has a content of hexane solubles determined on a 100 μm thick cast film according to FDA 177.1520 in the range of 0.1 to 2.0 wt.-%, preferably in the range of 0.1 to 1.8 wt.-%, more preferably in the range of 0.1 to 1.6 wt.-% and even more preferably in the range of 0.5 to 1.4 wt.-%.

**4.** The polymer composition according to any one of the preceding claims, **characterized in that**, component A) is obtainable, preferably obtained, in the presence of a metallocene catalyst, preferably said metallocene catatalyst comprises

i) a complex of formula (I):

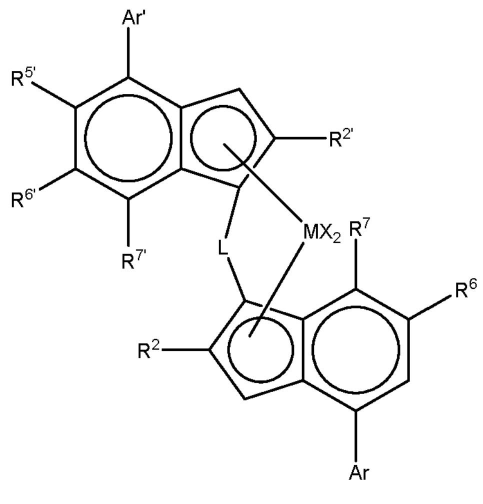

wherein M is zirconium or hafnium;
each X is a sigma ligand;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, $C_1$-$C_{20}$-hydrocarbyl, tri($C_1$-$C_{20}$-alkyl)silyl, $C_6$-$C_{20}$-aryl, $C_7$-$C_{20}$-arylalkyl or $C_7$-$C_{20}$-alkylaryl;
$R^2$ and $R^{2'}$ are each independently a $C_1$-$C_{20}$-hydrocarbyl radical optionally containing one or more

heteroatoms from groups 14 to 16;
$R^{5'}$ is a $C_{1-20}$-hydrocarbyl group containing one or more heteroatoms from groups 14 to 16 optionally substituted by one or more halo atoms;
$R^6$ and $R^{6'}$ are each independently hydrogen or a $C_{1-20}$-hydrocarbyl group optionally containing one or more heteroatoms from groups 14-16; wherein $R^{6'}$ is preferably a tertiary alkyl group;
$R^7$ is hydrogen or $C_{1-20}$-hydrocarbyl group optionally containing one or more heteroatoms from groups 14-16 and $R^{7'}$ is hydrogen;
Ar and Ar' each are independently an aryl or heteroaryl group having up to 20 carbon atoms optionally substituted by one or more groups $R^1$;
each $R^1$ is a $C_{1-20}$-hydrocarbyl group or two $R^1$ groups on adjacent carbon atoms taken together can form a fused 5 or 6 membered non aromatic ring with the Ar or Ar' group, said ring being itself optionally substituted with one or more groups $R^4$; each $R^4$ is a $C_{1-20}$-hydrocarbyl group; and

(ii) a cocatalyst comprising at least one or two compounds of a group 13 metal, preferably a Al and/or boron compound.

**5.** The polymer composition according to any one of the preceding claims, **characterized in that**,
component B) is a multimodal mLLDPE with at least two different comonomers selected from alpha-olefins having from 4 to 10 carbon atoms, which multimodal polymer of ethylene has a density in the range from 910 to 935 kg/$m^3$ and a Mw/Mn of 2 to 8.

**6.** The polymer composition according to any one of the preceding claims, **characterized in that**, component B) has a $MFR_{21}$/ $MFR_2$ of 13.0 to 35.0 ($MFR_{21}$ at 190°C under 21.6 kg load and $MFR_2$ at 190°C under 2.16 kg load).

**7.** The polymer composition according to any one of the preceding claims, **characterized in that**,
component B) comprises 1-butene and 1-hexene, preferably is a terpolymer comprising i) an ethylene butene copolymer and ii) an ethylene hexene copolymer, more preferably comprises i) an ethylene butene copolymer and ii) an ethylene hexene copolymer, whereby ethylene, butene and hexene are the only comonomers present in the respective component.

**8.** The polymer composition according to any one of the preceding claims, **characterized in that**,
the polymer composition comprises the at least one additive C), which is preferably selected from the group consisting of slip agents, acid scavengers, UV-stabilisers, pigments, antioxidants, additive carriers, nucleating agents and mixtures thereof, whereby these additives preferably are present in 0.1 to 5.0 wt.-% and more preferably in 0.1 to 4.0 wt.-% based on the overall weight of the polymer composition.

**9.** The polymer composition according to any one of the preceding claims, **characterized in that**,

the content of component A) in the polymer composition is in the range of 15 to 43 wt.-%, preferably in the of from 17 to 42 wt.-% and more preferably in the range of 19 to 41 wt.-% based on the overall weight of the polymer composition; and
the content of component B) in the polymer composition is in the range from 57 to 85 wt.-%, preferably in the range from 58 to 83 wt.-% and more preferably in the range from 59 to 81 wt.-% based on the overall weight of the polymer composition.

**10.** An article comprising the polymer composition according to any one of claims 1 to 9

**11.** The article according to claim 10, wherein the article is a blown film.

**12.** The blown film according to claim 11, **characterized in that**,
the sealing initiation temperature determined on a blown film with a thickness of 50 μm is in the range of 80°C to below 110°C, preferably in the range of 85°C to 100°C and more preferably in the range of 88°C to 96°C.

**13.** The blown film according to claim 11 or 12, **characterized in that**,
the blown film has a tensile modulus determined according to ISO 527-3 at 23°C on blown films with a thickness of 50 μm in machine direction as well as in transverse direction in the range of 200 to 500 MPa and preferably in the range of 240 to 370 MPa.

**14.** The blown films according to any one of claims 11 to 13, **characterized in that**, the blown film has an Elmendorf tear strength determined in accordance with ISO 6383/2 measured in machine direction in the range of 50.0 N/mm to 250.0 N/mm, preferably in the range of 70.0 to 180.0 N/mm and more preferably in the range of 85.0 to 150.0 N/mm.

**15.** Flexible packaging systems, selected from bags or pouches for food and pharmaceutical packaging comprising a blown film according to any one of claims 11 to 14.

## Patentansprüche

**1.** Eine Polymerzusammensetzung, umfassend mindestens die folgenden Komponenten:

A) 10,0 bis 45,0 Gew.-%, bezogen auf das Gesamtgewicht der Polymerzusammensetzung, eines statistischen $C_2C_3$-Copolymers; wobei das statistische $C_2C_3$-Copolymer aufweist

• einen Schmelzpunkt im Bereich von 110 bis 135°C, bestimmt durch dynamische Differenzkalorimetrie gemäß ISO 11357-3;
• einen $MFR_2$(230°C, 2,16 kg), bestimmt nach ISO 1133, im Bereich von 0,5 bis 4,0 g/10 min; und
• einen C3-Gehalt, der höher ist als der C2-Gehalt;

und wobei die Komponente A) besteht aus

a1) 50,0 bis 85,0 Gew.-% einer Polymerfraktion mit

i) einem C2-Gehalt im Bereich von 2,0 bis weniger als 5,5 Gew.-%, vorzugsweise im Bereich von 2,0 bis 5,49 Gew.-%; und
ii) eine Schmelzflussrate $MFR_2$ (230°C, 2,16 kg), bestimmt nach ISO 1133, im Bereich von 0,5 bis 5,0 g/10 min; und

a2) 15,0 bis 50,0 Gew.-% einer Polymerfraktion, aufweisend

i) einen C2-Gehalt im Bereich von 5,5 bis 10,0 Gew.-%; und
ii) eine Schmelzflußrate $MFR_2$ (230°C, 2,16 kg), gemessen nach ISO 1133, im Bereich von 0,1 bis 3,0 g/10 min;

wobei die Schmelzflußrate $MFR_2$ (230°C/ 2,16 kg) der Polymerfraktion a2) niedriger ist als die $MFR_2$ (230°C/ 2,16 kg) der Polymerfraktion a1);
B) 55,0 bis 90,0 Gew.-%, bezogen auf das Gesamtgewicht der Polymerzusammensetzung, eines mLLDPE; wobei das mLLDPE aufweist

• eine nach ISO 1183 bestimmte Dichte im Bereich von 900 bis 940 $kg/m^3$; und
• einen $MFR_2$ (190°C, 2,16 kg), bestimmt nach ISO 1133, im Bereich von 0,5 bis 4,0 g/10 min;

C) gegebenenfalls mindestens einen Zusatzstoff;

mit der Maßgabe, dass sich die Gewichtsanteile der Komponenten A) und B) und, falls vorhanden, der Komponente C) auf 100 Gew.-% summieren.

**2.** Die Polymerzusammensetzung nach Anspruch 1, **dadurch gekennzeichnet, dass** Komponente A) aufweist

• einen Gesamt-C2-Gehalt im Bereich von 2,5 bis 7,5 Gew.-% und vorzugsweise im Bereich von 3,0 bis 7,5 Gew.-%, bezogen auf das Gesamtgewicht der Komponente A);
• eine Schmelzflussrate $MFR_2$ (230°C/ 2,16 kg), gemessen nach ISO 1133, im Bereich von 0,5 bis 3,0 g/10 min.

**3.** Die Polymerzusammensetzung nach Anspruch 1 oder 2, **dadurch gekennzeichnet, dass** die Komponente A) einen Gehalt an hexanlöslichen Stoffen, bestimmt an einem 100 µm dicken, gegossenen Film gemäß FDA 177.1520, im Bereich von 0,1 bis 2,0 Gew.-%, vorzugsweise im Bereich von 0,1 bis 1,8 Gew.-%, noch bevorzugter im Bereich von

0,1 bis 1,6 Gew.-% und noch bevorzugter im Bereich von 0,5 bis 1,4 Gew.-% aufweist.

**4.** Die Polymerzusammensetzung nach einem der vorhergehenden Ansprüche, **dadurch gekennzeichnet, dass** die Komponente A) in Gegenwart eines Metallocen-Katalysators erhältlich ist, vorzugsweise erhalten wird, wobei der Metallocen-Katalysator vorzugsweise umfasst

i) einen Komplex der Formel (I):

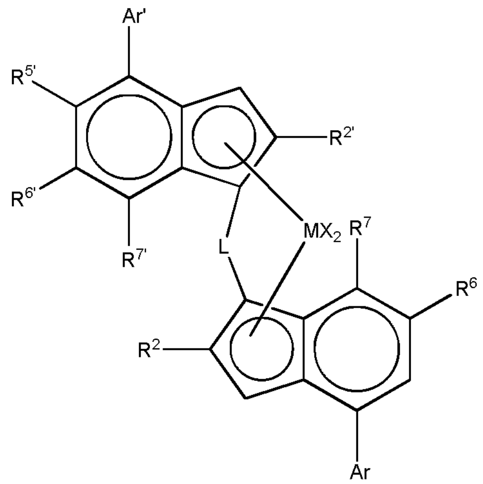

worin M Zirkonium oder Hafnium ist;
jedes X ein Sigma-Ligand ist;
L eine zweiwertige Brücke ist, ausgewählt aus $-R'_2C-$, $-R'_2C-CR'_2-$, $-R'_2Si-$, $-R'_2Si-SiR'_2-$, $-R'_2Ge-$, wobei jedes R' unabhängig ein Wasserstoffatom ist, $C_1$-$C_{20}$-Kohlenwasserstoff, Tri($C_1$-$C_{20}$-alkyl)silyl, $C_6$-$C_{20}$-Aryl, $C_7$-$C_{20}$-Arylalkyl oder $C_7$-$C_{20}$-Alkylaryl;
$R^2$ und $R^{2'}$ jeweils unabhängig voneinander ein $C_1$-$C_{20}$-Kohlenwasserstoffrest ist, der gegebenenfalls ein oder mehrere Heteroatome aus den Gruppen 14 bis 16 enthält;
$R^{5'}$ ein $C_{1-20}$-Kohlenwasserstoffrest ist, der ein oder mehrere Heteroatome der Gruppen 14 bis 16 enthält und gegebenenfalls durch ein oder mehrere Halogenatome substituiert ist;
$R^6$ und $R^{6'}$ jeweils unabhängig voneinander Wasserstoff oder eine $C_{1-20}$-Kohlenwasserstoffgruppe ist, die gegebenenfalls ein oder mehrere Heteroatome aus den Gruppen 14-16 enthält; wobei $R^{6'}$ vorzugsweise eine tertiäre Alkylgruppe ist;
$R^7$ Wasserstoff oder eine $C_{1-20}$-Kohlenwasserstoffgruppe ist, die gegebenenfalls ein oder mehrere Heteroatome aus den Gruppen 14-16 enthält, und $R^{7'}$ Wasserstoff ist;
Ar und Ar' jeweils unabhängig voneinander eine Aryl- oder Heteroarylgruppe mit bis zu 20 Kohlenstoffatomen ist, die gegebenenfalls durch eine oder mehrere Gruppen $R^1$ substituiert ist;
jedes $R^1$ eine $C_{1-20}$-Kohlenwasserstoffgruppe ist oder zwei $R^1$-Gruppen an benachbarten Kohlenstoffatomen zusammengenommen einen kondensierten 5- oder 6-gliedrigen nicht-aromatischen Ring mit der Ar- oder Ar'-Gruppe bilden können, wobei der Ring selbst gegebenenfalls mit einer oder mehreren Gruppen $R^4$ substituiert ist; jedes $R^4$ eine $C_{1-20}$-Kohlenwasserstoffgruppe ist; und

(ii) einen Cokatalysator, umfassend mindestens eine oder zwei Verbindungen eines Metalls der Gruppe 13, vorzugsweise eine Al- und/oder Borverbindung.

**5.** Die Polymerzusammensetzung nach einem der vorhergehenden Ansprüche, **dadurch gekennzeichnet, dass** die Komponente B) ein multimodales mLLDPE mit mindestens zwei verschiedenen Comonomeren ist, die aus Alpha-Olefinen mit 4 bis 10 Kohlenstoffatomen ausgewählt sind, wobei das multimodale Ethylenpolymer eine Dichte im Bereich von 910 bis 935 $kg/m^3$ und ein Mw/Mn von 2 bis 8 aufweist.

**6.** Die Polymerzusammensetzung nach einem der vorhergehenden Ansprüche, **dadurch gekennzeichnet, dass** die Komponente B) einen $MFR_{21}$/ $MFR_2$ von 13,0 bis 35,0 aufweist ($MFR_{21}$ bei 190°C unter einer Last von 21,6 kg und $MFR_2$ bei 190°C unter einer Last von 2,16 kg).

**7.** Die Polymerzusammensetzung nach einem der vorhergehenden Ansprüche, **dadurch gekennzeichnet, dass** Komponente B) 1-Buten und 1-Hexen umfasst, vorzugsweise ein Terpolymer ist, das i) ein Ethylen-Buten-Copolymer und ii) ein Ethylen-Hexen-Copolymer umfasst, noch bevorzugter i) ein Ethylen-Buten-Copolymer und ii) ein Ethylen-Hexen-Copolymer umfasst, wobei Ethylen, Buten und Hexen die einzigen Comonomere sind, die in der jeweiligen Komponente vorliegen.

**8.** Die Polymerzusammensetzung nach einem der vorhergehenden Ansprüche, **dadurch gekennzeichnet, dass** die Polymerzusammensetzung den mindestens einen Zusatzstoff C) umfasst, der vorzugsweise ausgewählt ist aus der Gruppe bestehend aus Gleitmitteln, Säurefängern, UV-Stabilisatoren, Pigmenten, Antioxidantien, Additivträgern, Nukleierungsmitteln und Mischungen davon, wobei diese Additive vorzugsweise in 0,1 bis 5,0 Gew.-% und besonders bevorzugt in 0,1 bis 4,0 Gew.-%, bezogen auf das Gesamtgewicht der Polymerzusammensetzung, vorhanden sind.

**9.** Die Polymerzusammensetzung nach einem der vorhergehenden Ansprüche, **dadurch gekennzeichnet, dass** der Gehalt der Komponente A) in der Polymerzusammensetzung im Bereich von 15 bis 43 Gew.-%, vorzugsweise im Bereich von 17 bis 42 Gew.-% und besonders bevorzugt im Bereich von 19 bis 41 Gew.-%, bezogen auf das Gesamtgewicht der Polymerzusammensetzung, liegt; und der Gehalt der Komponente B) in der Polymerzusammensetzung im Bereich von 57 bis 85 Gew.-%, vorzugsweise im Bereich von 58 bis 83 Gew.-% und besonders bevorzugt im Bereich von 59 bis 81 Gew.-%, bezogen auf das Gesamtgewicht der Polymerzusammensetzung, liegt.

**10.** Ein Artikel, umfassend die Polymerzusammensetzung nach einem der Ansprüche 1 bis 9.

**11.** Der Artikel nach Anspruch 10, wobei der Artikel eine geblasene Folie ist.

**12.** Die geblasene Folie nach Anspruch 11, **dadurch gekennzeichnet, dass** die an einer geblasenen Folie mit einer Dicke von 50 μm bestimmte Siegelanfangstemperatur im Bereich von 80°C bis unter 110°C, vorzugsweise im Bereich von 85°C bis 100°C und besonders bevorzugt im Bereich von 88°C bis 96°C liegt.

**13.** Die geblasene Folie nach Anspruch 11 oder 12, **dadurch gekennzeichnet, dass** die geblasene Folie ein Zugmodul, bestimmt nach ISO 527-3 bei 23°C an einer geblasenen Folie mit einer Dicke von 50 μm in Maschinenrichtung sowie in Querrichtung, im Bereich von 200 bis 500 MPa und vorzugsweise im Bereich von 240 bis 370 MPa aufweist.

**14.** Die geblasene Folie nach einem der Ansprüche 11 bis 13, **dadurch gekennzeichnet, dass** die geblasene Folie eine nach ISO 6383/2 bestimmte Elmendorf-Reißfestigkeit, gemessen in Maschinenrichtung, im Bereich von 50,0 N/mm bis 250,0 N/mm, vorzugsweise im Bereich von 70,0 bis 180,0 N/mm und besonders bevorzugt im Bereich von 85,0 bis 150,0 N/mm aufweist.

**15.** Flexible Verpackungssysteme, ausgewählt aus Behältnissen oder Beuteln für Lebensmittel- und Pharmaverpackungen, die eine geblasene Folie nach einem der Ansprüche 11 bis 14 umfassen.

## Revendications

**1.** Composition polymère comprenant au moins les composants suivants :

B) 10,0 à 45,0 % en poids, sur la base du poids total de la composition polymère d'un copolymère aléatoire en $C_2C_3$ ; moyennant quoi ledit copolymère aléatoire en $C_2C_3$ présente

• une température de fusion dans la plage de 110 à 135 °C déterminée par analyse calorimétrique différentielle selon l'ISO 11357-3 ;
• un $MFR_2$ (230 °C, 2,16 kg) déterminé selon l'ISO 1133 dans la plage de 0,5 à 4,0 g/10 min ; et
• une teneur en C3 supérieure à la teneur en C2 ;

et moyennant quoi le composant A) est constitué de

a1) 50,0 à 85,0 % en poids d'une fraction polymère présentant

i) une teneur en C2 dans la plage de 2,0 à moins de 5,5 % en poids, de préférence dans la plage de 2,0 à

5,49 % en poids ; et
ii) un indice de fluidité à chaud $MFR_2$ (230 °C, 2,16 kg) déterminé selon l'ISO 1133 dans la plage de 0,5 à 5,0 g/10 min ; et

a2) 15,0 à 50,0 % en poids d'une fraction polymère présentant

i) une teneur en C2 dans la plage de 5,5 à 10,0 % en poids ; et
ii) un indice de fluidité à chaud $MFR_2$ (230 °C/2,16 kg) mesuré selon l'ISO 1133 dans la plage de 0,1 à 3,0 g/10 min ;

l'indice de fluidité à chaud $MFR_2$ (230 °C/2,16 kg) de fraction polymère a2) étant inférieur au $MFR_2$ (230 °C/2,16 kg) de fraction polymère a1) ;
B) 55,0 à 90,0 % en poids sur la base du poids total de la composition polymère d'un mLLDPE ; moyennant quoi ledit mLLDPE présente

• une masse volumique déterminée selon l'ISO 1183 dans la plage de 900 à 940 kg/$m^3$ ; et
• un $MFR_2$ (190 °C, 2,16 kg) déterminé selon l'ISO 1133 dans la plage de 0,5 à 4,0 g/10 min ;

C) optionnellement au moins un additif ;
à condition que les proportions en poids des composants A) et B), et, le cas échéant du composant C), totalisent 100 % en poids.

**2.** Composition polymère selon la revendication 1, **caractérisée en ce que**, le composant A) présente

• une teneur en C2 totale dans la plage de 2,5 à 7,5 % en poids et de préférence dans la plage de 3,0 à 7,5 % en poids sur la base du poids total du composant A) ;
• un indice de fluidité à chaud $MFR_2$ (230 °C/2, 16 kg) mesuré selon l'ISO 1133 dans la plage de 0,5 à 3,0 g/10 min.

**3.** Composition polymère selon la revendication 1 ou 2, **caractérisée en ce que**, le composant A) présente une teneur en solubles d'hexane déterminée sur un film coulé de 100 μm d'épaisseur selon la FDA 177.1520 dans la plage de 0,1 à 2,0 % en poids, de préférence dans la plage de 0,1 à 1,8 % en poids, de manière davantage préférée dans la plage de 0,1 à 1,6 % en poids et de manière encore davantage préférée dans la plage de 0,5 à 1,4 % en poids.

**4.** Composition polymère selon l'une des revendications précédentes, **caractérisée en ce que**, le composant A) peut être obtenu, de préférence est obtenu, en présence d'un catalyseur métallocène, ledit catalyseur métallocène comprend de préférence

i) un complexe de formule (I) :

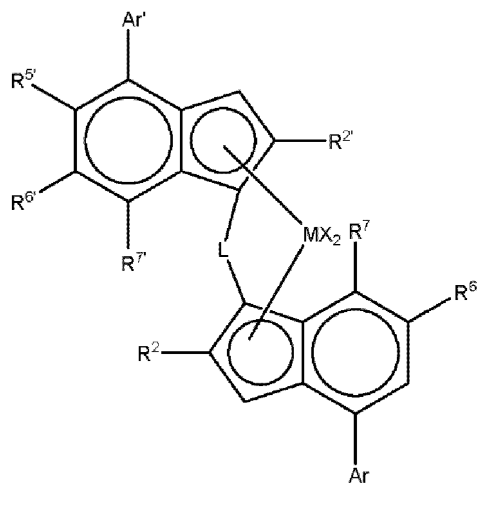

dans lequel M est du zirconium ou du hafnium ;
chaque X est un ligand sigma ;
L est un pont divalent sélectionné parmi $-R'_2C-$, $-R'_2C-CR'_2-$, $-R'_2Si-$, $-R'_2Si-SiR'_2-$, $-R'_2Ge-$, dans lequel chaque R' est indépendamment un atome d'hydrogène, un hydrocarbyle en $C_1$-$C_{20}$, un tri($C_1C_{20}$-alkyle) silyle, un aryle en $C_6$-$C_{20}$, un arylalkyle en $C_7$-$C_{20}$ ou un alkylaryle en $C_7$-$C_{20}$ ;
$R^2$ et $R^{2'}$ sont chacun indépendamment un radical hydrocarbyle en $C_1$-$C_{20}$ contenant optionnellement un ou plusieurs hétéroatomes des groupes 14 à 16 ;
$R^{5'}$ est un groupe hydrocarbyle en $C_{1-20}$ contenant un ou plusieurs hétéroatomes des groupes 14 à 16 optionnellement substitué avec un ou plusieurs atomes d'halogène ;
$R^6$ et $R^{6'}$ sont chacun indépendamment de l'hydrogène ou un groupe hydrocarbyle en $C_{1-20}$ hydrocarbyl contenant optionnellement un ou plusieurs hétéroatomes des groupes 14-16 ; dans lequel $R^{6'}$ est de préférence un groupe alkyle tertiaire ;
$R^7$ est de l'hydrogène ou un groupe hydrocarbyle en $C_{1-20}$ contenant optionnellement un ou plusieurs hétéroatomes des groupes 14-16 et $R^{7'}$ est de l'hydrogène ;
Ar et Ar' sont chacun indépendamment un groupe aryle ou hétéroaryle présentant jusqu'à 20 atomes de carbone optionnellement substitués par un ou plusieurs groupes $R^1$ ;
chaque $R^1$ est un groupe hydrocarbyle en $C_{1-20}$ ou deux groupes $R^1$ sur des atomes de carbone adjacents pris ensemble peuvent former un anneau non aromatique à 5 ou 6 organes fusionné avec le groupe Ar ou Ar', ledit anneau étant lui-même optionnellement substitué par un ou plusieurs groupes $R^4$ ; chaque $R^4$ est un groupe hydrocarbyle en $C_{1-20}$ ; et

(ii) un cocatalyseur comprenant au moins un ou deux composés d'un métal du groupe 13, de préférence un composé d'Al et/ou de bore.

5. Composition polymère selon l'une des revendications précédentes, **caractérisée en ce que**, le composant B) est un mLLDPE multimodal avec au moins deux comonomères différents sélectionnés parmi des alpha-oléfines présentant de 4 à 10 atomes de carbone, ce polymère multimodal d'éthylène présente une masse volumique dans la plage de 910 à 935 $kg/m^3$, et un Mw/Mn de 2 à 8.

6. Composition polymère selon l'une des revendications précédentes, **caractérisée en ce que**, le composant B) présente un $MFR_{21}/MFR_2$ de 13,0 à 35,0 ($MFR_{21}$ à 190 °C sous 21,6 kg de charge et $MFR_2$ à 190 °C sous 2,16 kg de charge).

7. Composition polymère selon l'une des revendications précédentes, **caractérisée en ce que**, le composant B) comprend du 1-butène et du 1-hexène, est de préférence un terpolymère comprenant i) un copolymère d'éthylène butène et ii) un copolymère d'éthylène hexène, comprend de manière davantage préférée i) un copolymère d'éthylène butène et ii) un copolymère d'éthylène hexène, moyennant quoi l'éthylène, le butène et l'hexène sont les seuls comonomères présents dans le composant respectif.

8. Composition polymère selon l'une des revendications précédentes, **caractérisée en ce que**, la composition polymère comprend l'au moins un additif C), qui est de préférence sélectionné parmi le groupe constitué d'agents glissants, de capteurs d'acide, de stabilisateurs UV, de pigments, d'antioxydants, de supports d'additifs, d'agents de nucléation et des mélanges de ceux-ci, moyennant quoi ces additifs sont de préférence présents de 0,1 à 5,0 % en poids et de manière davantage préférée de 0,1 à 4,0 % en poids sur la base du poids total de la composition polymère.

9. Composition polymère selon l'une des revendications précédentes, **caractérisée en ce que**,

la teneur en composant A) dans la composition polymère est dans la plage de 15 à 43 % en poids, de préférence dans la plage de 17 à 42 % en poids et de manière davantage préférée dans la plage de 19 à 41 % en poids sur la base du poids total de la composition polymère ; et
la teneur en composant B) dans la composition polymère est dans la plage de 57 à 85 % en poids, de préférence dans la plage de 58 à 83 % en poids et de manière davantage préférée dans la plage de 59 à 81 % en poids sur la base du poids total de la composition polymère.

10. Article comprenant la composition polymère selon l'une des revendications 1 à 9.

11. Article selon la revendication 10, dans lequel l'article est un film soufflé.

**12.** Film soufflé selon la revendication 11, **caractérisé en ce que**, la température initiale de scellement déterminée sur un film soufflé d'une épaisseur de 50 μm est dans la plage de 80 °C à moins de 110 °C, de préférence dans la plage de 85 °C à 100 °C et de manière davantage préférée dans la plage de 88 °C à 96 °C.

**13.** Film soufflé selon la revendication 11 ou 12, **caractérisé en ce que**, le film soufflé présente un module de traction déterminé selon l'ISO 527-3 à 23 °C sur des films soufflés d'une épaisseur de 50 μm dans le sens machine ainsi que dans le sens transversal dans la plage de 200 à 500 MPa et de préférence dans la plage de 240 à 370 MPa.

**14.** Films soufflés selon l'une des revendications 11 à 13, **caractérisés en ce que**, le film soufflé présente une résistance à la déchirure Elmendorf déterminée conformément à l'ISO 6383/2 mesurée dans le sens machine dans la plage de 50,0 N/mm à 250,0 N/mm, de préférence dans la plage de 70,0 à 180,0 N/mm et de manière davantage préférée dans la plage de 85,0 à 150,0 N/mm.

**15.** Systèmes d'emballage souples, sélectionnés parmi des sachets ou des pochettes pour emballage alimentaire et pharmaceutique comprenant un film soufflé selon l'une des revendications 11 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0557953 A1
- WO 0244272 A1
- US 4113806 A1
- EP 2965908 A1
- EP 19177302
- EP 0887379 A1
- WO 9212182 A1
- WO 2004000899 A1
- WO 2004111095 A1
- WO 9924478 A1
- WO 9924479 A1
- WO 0068315 A1
- WO 2018122134 A1
- WO 2013007650 A1
- WO 2015011135 A1


### Non-patent literature cited in the description


- *CHEMICAL ABSTRACTS*, 6683-19-8
- *CHEMICAL ABSTRACTS*, 31570-04-4
- *CHEMICAL ABSTRACTS*, 693- 36-7
- *CHEMICAL ABSTRACTS*, 52829-07-9
- *CHEMICAL ABSTRACTS*, 1843-05-6
- *CHEMICAL ABSTRACTS*, 1,3:2,4-bis(3,4
- *CHEMICAL ABSTRACTS*, 135861-56-2
- **INGH, G** ; **KOTHARI, A** ; **GUPTA, V.** *Polymer Testing*, 2009, vol. 28 (5), 475
- **ZHOU, Z.** ; **KUEMMERLE, R** ; **QIU, X** ; **REDWINE, D.** ; **CONG, R.** ; **TAHA, A** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R** ; **PELLECCHIA, R.** ; **SEVERN, J** ; **TALARICO, G.** *Macromol. Rapid Commun.*, 2007, vol. 28, 1128
- **CHENG, H. N**. *Macromolecules*, 1984, vol. 17, 1950
- **L. RESCONI** ; **L. CAVALLO** ; **A. FAIT** ; **F. PIEMONTESI**. *Chem. Rev.*, vol. 100 (4), 1253
- **W-J. WANG** ; **S. ZHU**. *Macromolecules*, 2000, vol. 33, 1157
- **WANG, W-J.** ; **ZHU, S.** *Macromolecules*, 2000, vol. 33, 1157
- **KAKUGO, M.** ; **NAITO, Y** ; **MIZUNUMA, K.** ; **MIYATAKE, T.** *Macromolecules*, 1982, vol. 15, 1150
- **KLIMKE, K** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M** ; **KLIMKE, K.** ; **SPIESS, H.W** ; **WILHELM, M**. *Macromol. Chem. Phys.*, 2007, vol. 208, 2128
- **CASTIGNOLLES, P.** ; **GRAF, R.** ; **PARKINSON, M** ; **WILHELM, M** ; **GABORIEAU, M**. *Polymer*, 2009, vol. 50, 2373
- **KLIMKE, K.** ; **PARKINSON, M.** ; **PIEL, C.** ; **KAMINSKY, W.** ; **SPIESS, H.W** ; **WILHELM, M.** *Macromol. Chem. Phys*, 2006, vol. 207, 382
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C** ; **SAMOSON, A.** ; **FILIP, C.** ; **BROWN, S.P.** *Mag. Res. in Chem.*, 2007, vol. 45, S1, S198
- *J&B Universal Sealing Machine Type 3000*